(19) **European Patent Office**
Office européen des brevets

Europäisches Patentamt

(11) **EP 0 714 432 B2**

(12) **NEW EUROPEAN PATENT SPECIFICATION**

(45) Date of publication and mention
of the opposition decision:
**07.03.2001 Bulletin 2001/10**

(51) Int Cl.[7]: **C11D 3/12**, C11D 3/39,
C11D 17/06

(45) Mention of the grant of the patent:
**08.04.1998 Bulletin 1998/15**

(86) International application number:
**PCT/EP94/02455**

(21) Application number: **94925389.2**

(87) International publication number:
**WO 95/05445 (23.02.1995 Gazette 1995/09)**

(22) Date of filing: **23.07.1994**

(54) **GRANULAR DETERGENT COMPOSITIONS CONTAINING ZEOLITE AND PROCESS FOR THEIR PREPARATION**

ZEOLITHHALTIGE GRANULARE WASCHMITTELZUSAMMENSETZUNGEN UND VERFAHREN ZU IHRER HERSTELLUNG

COMPOSITIONS DETERSIVES GRANULAIRES CONTENANT UNE ZEOLITE ET LEURS PROCEDES DE PREPARATION

(84) Designated Contracting States:
**CH DE ES FR GB IT LI NL SE**

(30) Priority: **18.08.1993 GB 9317180**

(43) Date of publication of application:
**05.06.1996 Bulletin 1996/23**

(73) Proprietors:
• **UNILEVER PLC**
**London EC4P 4BQ (GB)**
Designated Contracting States:
**GB**
• **UNILEVER N.V.**
**3013 AL Rotterdam (NL)**
Designated Contracting States:
**CH DE ES FR IT LI NL SE**

(72) Inventors:
• **CHAPPLE, Andrew, Paul**
**Nr. Wrexham, Clwyd LL11 5UN (GB)**

• **JOYEUX, Christophe**
**NL-3063 DC Rotterdam (NL)**
• **KNIGHT, Peter, Cory**
**South Wirral, Cheshire L64 6QS (GB)**
• **VAN LARE, Cornelis, Elisabeth, Johannes**
**NL-3137 PB Vlaardingen (NL)**

(74) Representative: **Fransella, Mary Evelyn et al**
**Unilever PLC**
**Patent Division**
**Colworth House**
**Sharnbrook**
**Bedford MK44 1LQ (GB)**

(56) References cited:
| | |
|---|---|
| EP-A- 0 270 240 | EP-A- 0 384 070 |
| EP-A- 0 420 317 | EP-A- 0 506 184 |
| EP-A- 0 552 054 | WO-A-92/06163 |
| WO-A-95/02672 | DE-A- 2 412 837 |
| DE-A- 2 655 482 | DE-A- 2 655 578 |
| GB-A- 2 182 051 | US-A- 4 391 727 |

EP 0 714 432 B2

**Description**

TECHNICAL FIELD

The present invention relates to granular detergent compositions containing zeolite and exhibiting improved storage stability of moisture sensitive ingredients such as persalt bleaches.

BACKGROUND AND PRIOR ART

The ability of crystalline aluminosilicates (zeolites) to sequester calcium ions from aqueous solution has led to their becoming a well-known replacement for phosphates as a detergency builder. Particulate detergent compositions containing zeolite are widely disclosed in the art, for example, in GB-A-1 473 201 (Henkel), and are sold commercially in many parts of Europe, Japan and the United States of America. The preferred zeolite for detergents use is generally zeolite A, which as the advantage of being a "maximum aluminium" structure containing the maximum possible proportion of aluminium to silicon - or the theoretical minimum Si:Al ratio of 1.0 - so that its capacity for taking up calcium ions from aqueous solution is intrinsically greater than those of zeolites X and P which generally contain a lower proportion of aluminium (or a higher Si:Al ratio).

Zeolites contain relatively high levels of relatively mobile water. For example, zeolite A in its equilibrium state contains 22 wt% of water of hydration, part of which is mobile at ambient temperatures. Incorporation of zeolites into particulate detergent compositions has therefore created a problem of lack of storage stability of ingredients sensitive to moisture, in particular, peroxy bleach compounds.

One of the most sensitive is sodium percarbonate, which until recently had been almost entirely superseded by the more stable sodium perborate tetrahydrate and monohydrate, but which is now coming back into favour following concern about the environmental impact of boron salts. Sodium percarbonate is an efficient, water-soluble weight-effective hydrogenperoxide-generating bleaching agent, and leaves a useful product (sodium carbonate) on completion of the bleaching reaction.

Detergent compositions containing zeolite A and sodium percarbonate are disclosed in DE 2 656 009A (Colgate-Palmolive), but storage stability is not discussed. According to GB 2 013 259A (Kao), the problem of sodium percarbonate instability in the presence of zeolite is solved by the use of an amorphous or partially crystalline aluminosilicate (0-75% crystallinity), or by the use of a partially calcium- or magnesium-exchanged material.

Another approach which has received attention is the protection of sodium percarbonate by coating or encapsulation, for example, a coating comprising sodium metaborate and sodium silicate as disclosed in GB 2 123 044B (Kao). However, such techniques can be complex and add significantly to the cost of the material.

WO 92 06163A (Procter & Gamble) discloses granular detergent compositions of high bulk density prepared by dry-mixing sodium percarbonate bleach with a "multicomponent ingredient" (a granulate, spray-dried powder or mixture of these) containing surfactants, detergency builders and other components, having a low content of iron, manganese and copper and an equilibrium relative humidity at 32°C of less than 30%. The combination of low heavy metal content and low moisture content (low relative humidity) is said to give compositions in which unprotected sodium percarbonate shows acceptable stability, although coated percarbonate is preferred.

EP 384 070A (Unilever) discloses a novel zeolite P (maximum aluminium zeolite P, or zeolite MAP) having an especially low silicon to aluminium ratio (not exceeding 1.33, and preferably not exceeding 1.15), which is a more efficient detergency builder than zeolite A. EP 522 726A (Unilever) discloses that replacement of zeolite A by zeolite MAP in detergent compositions containing sodium percarbonate gives significantly improved percarbonate storage stability, even though the equilibrium moisture content of zeolite MAP (19 wt%) is little different from that of zeolite 4A.

Sodium percarbonate and other persalt bleaches are normally incorporated in a detergent composition at a late stage, by dry-mixing with a granular base powder prepared by spray-drying or non-tower granulation. The base powder will always contain water that is potentially available to destabilise the added bleach salt.

Spray-drying is a process that necessarily involves large volumes of water. Non-tower mixing and granulation processes are now becoming increasingly popular, especially for the preparation of granular detergent compositions of bulk densities of, for example, 600 g/l and above. Granulation processes using high-speed mixers are disclosed, for example, in EP 340 013A, EP 367 339A, EP 390 351 A and EP 420 317A (Unilever). In non-tower processing, water content can be kept to a much lower level than in spray-drying processes, but some water is still inevitably introduced as part of surfactant raw materials: a non-tower powder may typically have a relative humidity of 45% or above.

Despite the various improvements mentioned above, therefore, it has been found desirable to dry zeolite-based powders, for example, on a fluidised bed, to a relative humidity of 30% or below, before admixture of water-sensitive bleach ingredients. However, fluidised bed drying is energy-consuming and the necessary additional processing step adds expense and complexity to the manufacturing process.

The present invention is based on the observation this drying step may be omitted if zeolite pre-dried to a moisture content substantially less that its equilibrium value is used to prepare the base powder before addition of the bleach. Rehydration of the zeolite does not occur to any significant extent during the preparation of the base powder and bleach stability comparable to that of fluidised-bed-dried powders prepared from fully hydrated zeolite is observed.

Particular benefit is obtained from using low-moisture-content zeolite MAP, which has been found to be more readily dried than zeolite A, and which reabsorbs water from a humid atmosphere much more slowly than does zeolite A. Dried zeolite MAP can therefore be handled more easily in a humid ambience without deleterious amounts of water being taken up.

US-A-4 391 727 (Colgate-Palmolive/Benz) discloses the use of dehydrated zeolites, typically having a moisture content of 1-2 wt%, as desiccants to prevent the caking of granular detergent compositions containing sodium perborate tetrahydrate. According to this disclosure, dried zeolite is always admixed with preformed granules (preferably spray-dried), although the granules themselves may also contain some zeolite. The admixed dehydrated zeolite takes up moisture from the other components that would otherwise cause caking.

WO-A-95/02672 discloses a process for making granular detergent composition in which partially hydrated crystalline sodium aluminosilicate (which can be zeolite MAP) having a moisture content of less than 15% is added as a powdery flow aid to a granular composition.

## DEFINITION OF THE INVENTION

The first subject of the present invention is a process for the preparation of a granular detergent composition, which process comprises the step of mixing and granulating zeolite, organic surfactants and other detergent ingredients in a high-speed mixer/granulator to form a homogeneous granular detergent base composition having a bulk density of at least 600 g/l, characterised in that the zeolite has a moisture content (removable at 800°C) not exceeding 15 wt%, and in that the relative humidity of air at 1 atmosphere and 20°C in equilibrium with the homogeneous granular detergent base composition thus obtained does not exceed 30%.

The second subject of the present invention is the use of zeolite having a moisture content (removable at 800°C) not exceeding 15 wt% to prepare, by mixing and granulation in a high-speed mixer/granulator, a homogeneous granular detergent base composition having a bulk density of at least 600 g/l comprising zeolite, organic surfactants and other detergent ingredients, the relative humidity of air at 1 atmosphere and 20°C in equilibrium with the homogeneous granular detergent base composition thus obtained being not greater than 30%.

## DETAILED DESCRIPTION OF THE INVENTION

The granular detergent composition of the invention is prepared by a non-tower process which includes the step of mixing and granulating zeolite of lower than equilibrium moisture content with organic detergent-active compounds and other ingredients. This process enables compositions of low relative humidity to be prepared by non-tower granulation without the need for a subsequent drying process, for example, on a fluidised bed, at an elevated temperature.

The compositions of the invention are characterised by a relative humidity value at 1 atm and 20°C not exceeding 30%. The term "relative humidity value' as used herein means the relative humidity of air in equilibrium with the composition: it is an indirect measurement of the water activity in a solid. It is the ratio of the current water concentration in the air (kg water/kg air) to the maximum at a given temperature and pressure, expressed as a percentage of the value for saturated air. For a solid an equilibrium is established between the water in the solid and the atmosphere, and the measured relative humidity is a characteristic for that solid at a given temperature and pressure. All relative humidity values quoted in the present specification are normalised to 1 atmosphere pressure and 20°C.

Preferred compositions of the invention have a relative humidity not exceeding 25%, and especially preferred compositions have a relative humidity not exceeding 20%.

Given that compositions of low relative humidity value are desirable in order that moisture-sensitive ingredients have acceptable storage stability, there are various advantages connected with using predried zeolite rather than post-drying a full base powder. The energy required to dry one single ingredient that will generally constitute at most 50 wt% of the base powder is lower than that required to dry the whole composition. Other ingredients do not have to be subjected to elevated temperatures; organic surfactants tend to be mobile liquids at the drying temperature and to migrate to the surface of the granules, causing stickiness, agglomeration, poor flow properties and even fluid bed fouling; and a fluidised bed imposes more stringent requirements on particle size distribution than would otherwise be necessary.

However, the surfactant raw materials generally have substantial amounts of water associated with them, and water may actually be generated during the preparation of the base powder if in-situ neutralisation of a surfactant acid is involved. Base powder preparation may take place in a humid atmosphere. It might therefore be expected that the predried zeolite would rehydrate during base powder preparation to an extent that the advantage of using it would be lost. Surprisingly, that has been found not to be the case; especially when the zeolite concerned is zeolite MAP.

Difficulties might also expected in the drying of the zeolite itself to a constant and reproducible low moisture content, and with the stability of the dried zeolite itself before it comes into contact with other ingredients. Again, these expected problems have not been found in practice, zeolite MAP being especially advantageous in this respect.

The low-moisture-content zeolite

Ion-exchanging crystalline zeolites have the general formula

$$M_x(SiO_2)_y(AlO_2)_x \cdot z\,H_2O$$

The ratio of silicon to aluminium (y:x) can vary, but for zeolites A and MAP approximates to the theoretical maximum of 1:1. The amount of water of hydration can also vary.

The zeolite used in the present invention initially has a moisture content lower than its equilibrium content, which for hydrated crystalline zeolites typically lies in the range of 18-22 wt%. This is the total water content, removable at 800°C.

In one embodiment of the invention, the zeolite is zeolite A, and has a moisture content (removable at 800°C) not exceeding 15 wt%, preferably from 10 to 15 wt%.

Zeolite A has an equilibrium water content of 22 wt%, based on the hydrated zeolite. This can be removed completely at the very high temperature of 800°C to leave the anhydrous material. About 75 wt% is removable at 135°C, ie at 135°C it can in principle be dried to a moisture content of about 7 wt%.

In another, especially preferred embodiment of the invention, the zeolite is zeolite MAP. The zeolite MAP preferably has a moisture content (removable at 800°C) not exceeding 13 wt%, more preferably from 5 to 13 wt%.

Zeolite MAP has an equilibrium water content of 19 wt%, based on the hydrated zeolite, of which 78 wt% is removable at 135°C, ie at 135°C it can in principle be dried to a moisture content of about 5 wt%.

Zeolite MAP was first disclosed in EP 384 070A (Unilever) and is defined as zeolite of the P type having a silicon to aluminium ratio not exceeding 1.33, preferably not exceeding 1.15, and more preferably not exceeding 1.07. It generally has a calcium binding capacity of at least 150 mg CaO/g anhydrous aluminosilicate, as measured by the standard method described in GB-A-1 473 201 (Henkel) and also described, as "Method I", in EP 384 070A (Unilever). The calcium binding capacity is normally at least 160 mg CaO/g and may be as high as 170 mg CaO/g. Zeolite MAP also generally has an "effective calcium binding capacity", measured as described under "Method II" in EP 384 070A (Unilever), of at least 145 mg CaO/g, preferably at least 150 mg CaO/g.

Surprisingly, it has been found that zeolite MAP is easier to dry than zeolite A; and the dried material also rehydrates less readily, so is much more stable and easy to handle.

The relative rates of drying of zeolites A and MAP at two temperatures are illustrated in the following experiment, in which the weight losses of samples under isothermal conditions in a thermogravimetric analyser (Perkin-Elmer (Trade Mark) TGA-7) under a flow of 100 ml/min dry nitrogen were measured.

The results are shown in Table 1 below. They show that it is significantly easier to dry zeolite MAP that to dry zeolite A. For example, to produce zeolites having a moisture content of approximately 10 wt%, at 80°C it would take 15 minutes for zeolite MAP, as compared with 50 minutes for zeolite A. Alternatively, to attain the same final moisture content of 10 wt% using the same drying time, a temperature of 80°C is needed for zeolite A while a temperature of 60°C suffices for zeolite MAP.

TABLE 1 -

| Drying times of zeolite A and zeolite MAP | | | | |
|---|---|---|---|---|
| Drying time (min) | Moisture contents (wt%) | | | |
| | zeolite A | | zeolite MAP | |
| | 60°C | 80°C | 60°C | 80°C |
| 4.5 | 18.9 | 16.9 | 16.8 | 15.0 |
| 8.9 | 18.0 | 15.5 | 15.8 | 12.6 |
| 13.4 | 17.5 | 14.5 | 14.9 | 10.6 |
| 17.9 | 17.1 | 13.8 | 14.1 | 8.8 |

TABLE 1 - (continued)

| Drying times of zeolite A and zeolite MAP | | | | |
|---|---|---|---|---|
| Drying time (min) | Moisture contents (wt%) | | | |
| | zeolite A | | zeolite MAP | |
| | 60°C | 80°C | 60°C | 80°C |
| 22.4 | 16.8 | 13.0 | 13.3 | 7.4 |
| 26.8 | 16.6 | 12.4 | 12.5 | |
| 35.8 | 16.0 | 11.5 | 11.0 | |
| 44.7 | 15.6 | 10.6 | 9.8 | |
| 53.5 | 14.3 | 9.9 | 8.7 | |

TABLE 2:

| Rehydration behaviour of zeolite A and zeolite MAP | | |
|---|---|---|
| Time (hr) | % of equilibrium water content | |
| | zeolite A | zeolite MAP |
| 0 | 25 | 22 |
| 0.47 | 41.8 | 33.1 |
| 1.25 | 60.1 | 41.3 |
| 1.75 | 70.3 | 47.5 |
| 3.0 | 86.2 | 60.4 |
| 3.5 | 90.1 | 64.7 |
| 4.58 | 96.2 | 73.9 |
| 5.42 | 98.4 | 78.8 |
| 5.83 | 98.7 | 81.1 |
| 7.33 | 99.0 | 87.7 |
| 9.0 | 99.1 | 93.2 |
| 25.0 | 100.0 | 100.0 |

Table 2 shows the rehydration behaviour of zeolites A and MAP after drying at 135°C. A sample of each zeolite was dried at 135°C for 2 hours, allowed to cool to ambient temperature in a desiccator, then exposed to humid air (43% RH) at 25°C in a shallow (2-3 mm) bed. Hydration as a function of time was then measured by monitoring weight increase.

These results show the faster rehydration of zeolite A. The hydration of both zeolites obeys first order kinetics, and the rehydration rate constants are as follows, pointing the difference more strongly:

| zeolite A | $0.708 \text{ hr}^{-1}$ |
|---|---|
| zeolite MAP | $0.247 \text{ hr}^{-1}$ |

Such is the stability of zeolite MAP having intermediate, less than equilibrium levels of hydration, for example, 10 wt%, that it can actually be manufactured and supplied consistently to such levels.

Preferred zeolite MAP for use in the present invention is especially finely divided and has a $d_{50}$ (as defined below) within the range of from 0.1 to 5.0 micrometres, more preferably from 0.4 to 2.0 micrometres, and most preferably from 0.4 to 1.0 micrometres. The quantity $d_{50}$ indicates that 50 wt% of the particles have a diameter smaller than that figure, and there are corresponding quantities $d_{80}$, $d_{90}$ etc. Especially preferred zeolite MAP has a $d_{90}$ below 3.0 micrometres as well as a $d_{50}$ below 1.0 micrometres. These quantities are as measured by means of a Malvern (Trade Mark) Mastersizer with a 45 mm lens, after dispersion in demineralised water and ultrasonification for 10 minutes.

Detergent compositions

The detergent compositions of the invention will contain, as essential ingredients, one or more detergent-active compounds (surfactants) which may be chosen from soap and non-soap anionic, cationic, nonionic, amphoteric and zwitterionic detergent-active compounds, and mixtures thereof. Many suitable detergent-active compounds are available and are fully described in the literature, for example, in 'Surface-Active Agents and Detergents", Volumes I and II, by Schwartz, Perry and Berch. The preferred detergent-active compounds that can be used are soaps and synthetic non-soap anionic and nonionic compounds.

Anionic surfactants are well-known to those skilled in the art. Examples include alkylbenzene sulphonates, particularly linear alkylbenzene sulphonates having an alkyl chain length of $C_8$-$C_{15}$; primary and secondary alkyl sulphates, particularly $C_{12}$-$C_{15}$ primary alkyl sulphates; alkyl ether sulphates; olefin sulphonates; alkyl xylene sulphonates; dialkyl sulphosuccinates; and fatty acid ester sulphonates. Sodium salts are generally preferred.

Nonionic surfactants that may be used include the primary and secondary alcohol ethoxylates, especially the $C_8$-$C_{20}$ aliphatic alcohols ethoxylated with an average of from 1 to 20 moles of ethylene oxide per mole of alcohol, and more especially the $C_{10}$-$C_{15}$ primary and secondary aliphatic alcohols ethoxylated with an average of from 1 to 10 moles of ethylene oxide per mole of alcohol. Non-ethoxylated nonionic surfactants include alkylpolyglycosides, glycerol monoethers, and polyhydroxyamides (glucamide).

The total amount of detergent-active compound present may suitably range from 5 to 40 wt%. Detergent compositions suitable for use in most automatic fabric washing machines generally contain anionic non-soap surfactant, or nonionic surfactant, or combinations of the two in any ratio, optionally together with soap. Especially preferred surfactant systems for use in the present invention comprise linear alkylbenzene sulphonate in combination with ethoxylated alcohol nonionic surfactant, optionally together with soap; primary alcohol sulphate in combination with ethoxylated alcohol nonionic surfactant, optionally together with soap, more particularly as described in EP 544 492A (Unilever); and ethoxylated alcohol nonionic surfactant, optionally together with soap.

The detergent compositions of the invention also contain a detergency builder system consisting wholly or partially of zeolite. The total amount of detergency builder in the compositions will suitably range from 10 to 80 wt%, preferably from 15 to 60 wt%. The amount of zeolite present is suitably from 10 to 45 wt%, based on the anhydrous zeolite, and preferably from 15 to 45 wt%.

Supplementary organic or inorganic builders may be present if desired. Organic builders that may be present include polycarboxylate polymers such as polyacrylates, acrylic/maleic copolymers, and acrylic phosphinates; monomeric polycarboxylates such as citrates, gluconates, oxydisuccinates, glycerol mono-, di- and trisuccinates, carboxymethyloxysuccinates, carboxymethyloxymalonates, dipicolinates, hydroxyethyliminodiacetates, alkyl- and alkenylmalonates and succinates; and sulphonated fatty acid salts. This list is not intended to be exhaustive.

Especially preferred organic builders are citrates, suitably used in amounts of from 5 to 30 wt%, preferably from 10 to 25 wt%; and acrylic polymers, more especially acrylic/maleic copolymers, suitably used in amounts of from 0.5 to 15 wt%, preferably from 1 to 10 wt%. Supplementary inorganic builders include layered silicates (SKS-6).

Builders, both organic and inorganic, are preferably present in alkali metal, more preferably sodium, salt form.

Bleaching ingredients

The present invention is of especial advantage for compositions containing peroxy bleach compounds, for example, inorganic persalts or organic peroxyacids, capable of yielding hydrogen peroxide in aqueous solution. Suitable peroxy bleach compounds include organic peroxides such as urea peroxide, and inorganic persalts such as the alkali metal perborates, percarbonates, perphosphates, persilicates and persulphates. Preferred inorganic persalts are sodium perborate monohydrate and tetrahydrate, and sodium percarbonate.

As previously indicated, the invention is of especial applicability to compositions containing sodium percarbonate. The percarbonate may if desired have a protective coating against destabilisation by moisture, for example, a coating comprising sodium metaborate and sodium silicate as disclosed in GB 2 123 044B (Kao). However, coating or other protection of the percarbonate is not essential and the invention also encompasses the use of uncoated percarbonate.

The peroxy bleach compound is suitably present in an amount of from 5 to 35 wt%, preferably from 10 to 25 wt%.

The peroxy bleach compound may be used in conjunction with a bleach activator (bleach precursor) to improve bleaching action at low wash temperatures. The bleach precursor is suitably present in an amount of from 1 to 8 wt%, preferably from 2 to 5 wt%. Preferred bleach precursors are peroxycarboxylic acid precursors, more especially peracetic acid precursors and peroxybenzoic acid precursors; and peroxycarbonic acid precursors. An especially preferred bleach precursor suitable for use in the present invention is N,N,N',N'-tetracetyl ethylenediamine (TAED).

A bleach stabiliser (heavy metal sequestrant) may also be present. Suitable bleach stabilisers include ethylenediamine tetraacetate (EDTA) and the polyphosphonates such as Dequest (Trade Mark), EDTMP.

An especially preferred bleach system comprises a peroxy bleach compound (preferably sodium percarbonate optionally together with a bleach activator), and a transition metal bleach catalyst as described and claimed in EP 458 397A, EP 458 398A and EP 509 787A (Unilever).

Other ingredients

The compositions of the invention may contain alkali metal, preferably sodium, carbonate, in order to increase detergency and ease processing. Sodium carbonate may suitably be present in amounts ranging from 1 to 60 wt%, preferably from 2 to 40 wt%. However, compositions containing little or no sodium carbonate are also within the scope of the invention.

Powder flow may be improved by the incorporation of a small amount of a powder structurant, for example, a fatty acid soap, a sugar, an acrylate or acrylate/maleate polymer, or sodium silicate. A preferred powder structurant is fatty acid soap, suitably present in an amount of from 1 to 5 wt%.

Other materials that may be present in detergent compositions of the invention include sodium silicate; antiredeposition agents such as cellulosic polymers; fluorescers; inorganic salts such as sodium sulphate; lather control agents or lather boosters as appropriate; proteolytic and lipolytic enzymes; dyes; coloured speckles; perfumes; foam controllers; and fabric softening compounds. This list is not intended to be exhaustive.

Preparation of the detergent compositions

The granular detergent compositions of the invention are prepared by a granulation process which comprises the step of mixing and granulating zeolite having a moisture content (removable at 800°C) not exceeding 15 wt% with organic detergent-active compounds and other detergent ingredients.

The mixing and granulation process is carried out using a high-speed mixer/granulator, for example, as described in EP 340 013A, EP 367 339A, EP 390 351A and EP 420 317A (Unilever). Both batch and continuous processing are possible.

Batch processing may suitably be carried out in a high-speed mixer/granulator which is bowl-shaped and has a substantially vertical stirring axis. Preferred batch mixers are those of the Fukae (Trade Mark) FS-G series manufactured by Fukae Powtech Kogyo Co., Japan. This apparatus is essentially in the form of a bowl-shaped vessel accessible via a top port, provided near its base with a stirrer having a substantially vertical axis, and a cutter positioned on a side wall. The stirrer and cutter may be operated independently of one another, and at separately variable speeds. The vessel can be fitted with a temperature control jacket.

Continuous operation may advantageously be carried out in a mixer comprising a hollow cylinder, mounted with its longitudinal axis in a substantially horizontal orientation, having therein an axial rotatable shaft with cutting and stirring blades mounted thereon. An examples of such a mixer is the Lödige (Trade Mark) CB30 Recycler.

This apparatus essentially consists of a large, static hollow cylinder having a diameter of about 30 cm which contains an axially mounted rotatable shaft carrying several different types of stirring and cutting blades. The shaft can be rotated at speeds of from 100 to 2500 rpm depending on the mixing intensity and particle size desired. Such a mixer provides a high energy stirring input and achieves very thorough mixing of both liquids and solids in a very short time. For larger scale operation, the CB50 Recycler with a 50 cm diameter cylinder is suitable.

The granulation process in the high-speed mixer/granulator gives a base powder which may also contain robust ingredients such as fluorescers, supplementary organic or inorganic builders, sodium carbonate, and antiredeposition polymers. Nonionic surfactants may be incorporated during the granulation process, or subsequently admixed. Sensitive ingredients such as bleach compounds, enzyme granules, foam control granules and perfume are always admixed subsequently (postdosed).

Anionic surfactant, for example, linear alkylbenzene sulphonate or primary alcohol sulphate, to be incorporated in the base powder may take various forms, for example, a paste, or a mobile liquid blend with a nonionic surfactant as described in EP 265 203B and EP 544 365A (Unilever). Another possibility is an in-situ neutralisation process as described in EP 420 317A (Unilever) or EP 506 184A (Unilever), wherein surfactant acid, some water and at least a stoichiometric proportion of sodium carbonate are mixed and granulated together with the zeolite and other required ingredients. In all these cases, water is of necessity incorporated together with the surfactant; the in-situ neutralisation process requires water to initiate the reaction, and water is also generated by the reaction itself. Mobile anionic/nonionic blends must also contain water generally 3-10 wt%.

Even if no non-soap anionic surfactant is present, blends of nonionic surfactants with soap may contain significant quantities of water derived from the soap. Surprisingly, however, the dry zeolite used according to the present invention appears to be able to adsorb the water from water-containing surfactants.

It has been found that, in order to obtain a base powder having a relative humidity of 30% or less, the starting zeolite must have a water content not exceeding 15 wt%, and in the case of zeolite MAP a water content not exceeding 13 wt% is strongly preferred.

Bulk density

Granular detergent compositions of the invention have bulk densities ranging upwards from 600 g/l. The processes just described are especially suitable for the production of high bulk density compositions, - at least 650 g/l, especially at least 700 g/l and more especially at least 750 g/l.

EXAMPLES

The invention is further illustrated by the following non-limiting Examples, in which parts and percentages are by weight unless otherwise stated. Examples denoted by numbers are within the invention, while Examples denoted by letters are comparative.

The following abbreviations are used in the Examples:

CocoPAS: primary linear $C_{12-14}$ alcohol sulphate derived from coconut alcohol

Nonionic 1: primary linear $C_{12-14}$ alcohol (coconut) ethoxylated with an average of about 5 moles of ethylene oxide per mole of alcohol

Nonionic 2: synthetic $C_{12-15}$ alcohol ethoxylated with an average of about 5 moles of ethylene oxide per mole of alcohol

TAED: tetraacetylethylenediamine (in granular form).

Examples 1 to 3

Detergent base powders were prepared by granulating zeolite MAP having a moisture content of 9.5 wt% with three different aqueous surfactant blends having the following compositions (wt%):

|  | 1 | 2 | 3 |
|---|---|---|---|
| CocoPAS | 39.0 | 24.8 | - |
| Nonionic 1 | - | 57.9 | 82.3 |
| Nonionic 2 | 52.0 | - | - |
| Sodium stearate | - | 9.7 | 14.5 |
| Water | 9.0 | 7.6 | 4.2 |
|  | 100.0 | 100.0 | 100.0 |

The zeolite MAP was mixed with the surfactant blends in the following proportions:

|  | 1 | 2 | 3 |
|---|---|---|---|
| Surfactant blend | 37.9 | 41.4 | 37.9 |
| Zeolite MAP (hydrated) | 62.1 | 58.6 | 62.1 |
|  | 100.0 | 100.0 | 100.0 |

Granulation was carried out in a Fukae (Trade Mark) FS-30 30-litre batch mixer, at a jacket temperature of 60°C. The solids (zeolite MAP) were introduced first into the mixer, then the liquid surfactant blend added in a single dose. The mixer was operated at a stirrer speed of 100 rpm and a cutter speed of 3000 rpm, for a residence time of 2-3 minutes; the product was then removed and allowed to cool to ambient temperature.

The resulting granular products (detergent base powders) had the following compositions:

|  | 1 | 2 | 3 |
|---|---|---|---|
| CocoPAS | 14.8 | 10.3 | - |
| Nonionic 1 | 19.8 | - | 31.2 |
| Nonionic 2 | - | 24.0 | - |
| Sodium stearate | - | 4.0 | 5.5 |

EP 0 714 432 B2

(continued)

|  | 1 | 2 | 3 |
|---|---|---|---|
| Zeolite MAP (anhydr) | 56.2 | 53.0 | 56.2 |
| Total water | 9.2 | 8.7 | 7.1 |
|  | 100.0 | 100.0 | 100.0 |

In this composition table the amount of zeolite MAP is shown on a notional anhydrous basis, and the water content given is the total of the water of hydration of the zeolite and the water associated with the surfactant blend. Bulk densities were as follows:

|  | 1 | 2 | 3 |
|---|---|---|---|
| Bulk density (g/l) | 870 | 860 | 870 |

The granular products (detergent base powders) were placed in sealed containers and the relative humidity of the air in contact with each sample was measured at different times after preparation:

| Time (hours) | Relative humidity (%) | | |
|---|---|---|---|
|  | 1 | 2 | 3 |
| 1 | 35 | 35 | 24 |
| 2 | 23 | 21 | 21 |
| 24 | 22 | 20 | 20 |

It will be seen that although initial relative humidity values were above 30%, the powders rapidly settled to low equilibrium values.

Examples 4 to 7, Comparative Examples A to C

These Examples show how the relative humidity of a granulated base powder varies with the moisture content of the zeolite used.
The powders were prepared by granulation in the Fukae FS-30 mixer as described in Examples 1 to 3. The surfactant blend was that of Example 2, containing 7.6 wt% water. As in Example 2, each base powder was prepared by granulating 41.4 wt% of the surfactant blend and 58.6 wt% (hydrated basis) of zeolite MAP. The compositions were as shown in the following table.

9

## Compositions of Examples 4 to 7 and Comparative Examples A to C

|                      | A     | B     | C     | 4     | 5     | 6     | 7     |
|----------------------|-------|-------|-------|-------|-------|-------|-------|
| CocoPAS              | 10.3  | 10.3  | 10.3  | 10.3  | 10.3  | 10.3  | 10.3  |
| Nonionic 1           | 24.0  | 24.0  | 24.0  | 24.0  | 24.0  | 24.0  | 24.0  |
| Sodium stearate      | 4.0   | 4.0   | 4.0   | 4.0   | 4.0   | 4.0   | 4.0   |
| Zeolite MAP (anhydr) | 47.6  | 48.8  | 49.9  | 51.0  | 52.1  | 53.7  | 55.4  |
| Total water          | 14.1  | 12.9  | 11.8  | 10.7  | 9.6   | 8.0   | 6.3   |
|                      | ----- | ----- | ----- | ----- | ----- | ----- | ----- |
|                      | 100.0 | 100.0 | 100.0 | 100.0 | 100.0 | 100.0 | 100.0 |

EP 0 714 432 B2

Bulk densities, water contents of the zeolite MAP samples and the relative humidity values of the corresponding powders after 48 hours were as follows:

| Example | Zeolite MAP water content | Bulk density | Relative humidity 48 hours after preparation |
|---------|---------------------------|--------------|----------------------------------------------|
|         | (wt%)                     | (g/litre)    | (%)                                          |
| A       | 19.0                      | 850          | 60                                           |
| B       | 16.7                      | 850          | 53                                           |
| C       | 14.9                      | 850          | 43                                           |
| 4       | 13.0                      | 860          | 29                                           |
| 5       | 11.1                      | 860          | 25                                           |
| 6       | 8.3                       | 860          | 20                                           |
| 7       | 5.5                       | 870          | 20                                           |

With these compositions, it was necessary to use zeolite MAP having a moisture content of 13.0 wt% or less in order to obtain a powder having a relative humidity value of less than 30%.

Examples 8 to 11, Comparative Examples D to F

A series of experiments similar to those of Examples 4 to 7 was carried out using zeolite A instead of zeolite MAP. The surfactant blend was similar to that of Example 2 and had the following composition:

|                 | wt%   |
|-----------------|-------|
| CocoPAS         | 25.6  |
| Nonionic 1      | 57.9  |
| Sodium stearate | 9.1   |
| Water           | 7.4   |
|                 | 100.0 |

Each base powder was prepared by granulating 30.9 wt% of the surfactant blend with 61.5 wt% (hydrated basis) of zeolite A and 7.6 wt% of anhydrous sodium carbonate (light soda ash).
The compositions were as shown in the following table.

## Compositions of Examples 8 to 11 and Comparative Examples D to F

|                     | D     | E     | F     | 8     | 9     | 10    | 11    |
|---------------------|-------|-------|-------|-------|-------|-------|-------|
| CocoPAS             | 7.9   | 7.9   | 7.9   | 7.9   | 7.9   | 7.9   | 7.9   |
| Nonionic 1          | 17.9  | 17.9  | 17.9  | 17.9  | 17.9  | 17.9  | 17.9  |
| Sodium stearate     | 2.8   | 2.8   | 2.8   | 2.8   | 2.8   | 2.8   | 2.8   |
| Zeolite A (anhydr)  | 48.6  | 49.9  | 50.8  | 51.6  | 52.1  | 52.6  | 53.3  |
| Light soda ash      | 7.6   | 7.6   | 7.6   | 7.6   | 7.6   | 7.6   | 7.6   |
| Total water         | 15.2  | 13.9  | 13.0  | 12.2  | 11.7  | 11.2  | 10.5  |
|                     | ----- | ----- | ----- | ----- | ----- | ----- | ----- |
|                     | 100.0 | 100.0 | 100.0 | 100.0 | 100.0 | 100.0 | 100.0 |

Bulk densities, water contents of the zeolite A samples and the relative humidity values of the corresponding powders after 48 hours were as follows:

| Example | Zeolite A water content | Bulk density | Relative humidity 48 hours after preparation |
|---|---|---|---|
| | (wt%) | (g/litre) | (%) |
| D | 21.0 | 850 | 65 |
| E | 18.9 | 850 | 61 |
| F | 17.4 | 850 | 55 |
| 8 | 16.1 | 850 | 42 |
| 9 | 15.3 | 850 | 29 |
| 10 | 14.4 | 855 | 20 |
| 11 | 13.4 | 860 | 9 |

With these compositions, it was necessary to use zeolite A having a moisture content of 15 wt% or less in order to obtain a powder having a relative humidity value of less than 30%. The use of zeolite A containing 13.4 wt% moisture allowed a powder having the very low relative humidity value of 9% to be produced.

Example 12, Comparative Examples G and H

These Examples show how the storage stability of sodium percarbonate, admixed to a granular detergent base powder, is improved by reduction of the relative humidity value of the base powder achieved by means of the present invention.

Detergent compositions were prepared by mixing detergent base powders from previous Examples with other ingredients as follows:

Example 12 (base powder of Example 2)

| | % of base | % of product |
|---|---|---|
| CocoPAS | 10.3 | 6.55 |
| Nonionic 2 | 24.0 | 15.26 |
| Sodium stearate | 4.0 | 2.54 |
| Zeolite MAP (anhydr)* | 53.0 | 33.71 |
| Total water | 8.7 | 5.53 |
| | 100.0 | 63.60 |
| Sodium percarbonate | | 18.9 |
| TAED (granules) | | 8.7 |
| Sodium silicate | | 5.7 |
| Enzyme granules | | 0.9 |
| Minor solids | | 2.7 |
| | | 100.0 |

*Moisture content of zeolite MAP: 9.5 wt%.

Comparative Example G (base powder of Comparative Example A):

| | % of base | % of product |
|---|---|---|
| CocoPAS | 10.3 | 6.55 |
| Nonionic 2 | 24.0 | 15.26 |
| Sodium stearate | 4.0 | 2.54 |

(continued)

| | % of base | % of product |
|---|---|---|
| Zeolite MAP (anhydr)* | 47.6 | 30.27 |
| Total water | 14.1 | 8.98 |
| | 100.0 | 63.60 |
| Sodium percarbonate | | 18.9 |
| TAED (granules) | | 8.7 |
| Sodium silicate | | 5.7 |
| Enzyme granules | | 0.9 |
| Minor solids | | 2.7 |
| | | 100.0 |

*Moisture content of zeolite MAP: 19.0 wt%.

Comparative Example H used a base powder corresponding to that of Comparative Example G (Comparative Example A), but after fluidised bed drying.

Sodium percarbonate storage stability was measured in cardboard cartons under two sets of storage conditions: 28°C/70% relative humidity and 37°C/70% relative humidity.

The results were as follows:

| | 12 | G | H |
|---|---|---|---|
| Relative humidity value | 20 | 60 | 17 |

| Storage conditions | % available oxygen remaining | | |
|---|---|---|---|
| 4 weeks, 37°C/70% relative humidity | 70 | 40 | 71 |
| 6 weeks, 37°C/70% relative humidity | 40 | 25 | 42 |
| 6 weeks, 28°C/70% relative humidity | 72 | 62 | 70 |

These results show that the improvement in sodium percarbonate stability obtained by means of the present invention was the same (within experimental error) as that obtained with powder prepared using zeolite MAP of normal moisture content and then dried on a fluidised bed.

**Claims**

1.  A process for the preparation of a granular detergent composition, which process comprises the step of mixing and granulating zeolite, organic surfactants and other detergent ingredients in a high-speed mixer/granulator to form a homogeneous granular detergent base composition having a bulk density of at least 600 g/l, characterised in that the zeolite has a moisture content (removable at 800°C) not exceeding 15 wt%, and in that the relative humidity of air at 1 atmosphere and 20°C in equilibrium with the homogeneous granular detergent base composition thus obtained does not exceed 30%

2.  A process as claimed in claim 1, characterised in that the zeolite has a moisture content within the range of from 5 to 15 wt%.

3.  A process as claimed in claim 2, characterised in that the zeolite is zeolite A and has a moisture content within the range of from 10 to 15 wt%

4.  A process as claimed in claim 2, characterised in that the zeolite is zeolite P having a silicon to aluminium ratio not exceeding 1.33 (zeolite MAP) and has a moisture content within the range of from 5 to 13 wt%.

5.  A process as claimed in claim 4, characterised in that the zeolite MAP has a silicon to aluminium ratio not exceeding 1.15:1.

6. A process as claimed in any preceding claim, characterised in that the relative humidity of air at 1 atmosphere and 20°C in equilibrium with the homogeneous granular detergent composition does not exceed 25%.

7. A process as claimed in any one of claims 1 to 6, characterised in that a peroxy bleaching system is subsequently admixed to the homogeneous granular detergent composition.

8. A process as claimed in claim 7, characterised in that the peroxy bleach system comprises sodium percarbonate.

9. Use of zeolite having a moisture content (removable at 800°C) not exceeding 15 wt% to prepare, by mixing and granulation in a high-speed mixer/granulator, a homogeneous granular detergent base composition having a bulk density of at least 600 g/l comprising zeolite, organic surfactants and other detergent ingredients, the relative humidity of air at 1 atmosphere and 20°C in equilibrium with the homogeneous granular detergent base composition thus obtained being not greater than 30%.

## Patentansprüche

1. Verfahren zur Herstellung eines gekörnten Waschmittels, wobei das Verfahren den Schritt Vermischen und Granulieren von Zeolith, organischen Tensiden und anderen Waschmittelbestandteilen in einem Hochgeschwindigkeitsmischer/Granulator, zur Bildung einer homogenen gekörnten Waschmittelgrundlage mit einer Schüttdichte von mindestens 600 g/l umfaßt, dadurch gekennzeichnet, daß der Zeolith einen Feuchtigkeitsgehalt (entfernbar bei 800°C) aufweist, der 15 Gew.-% nicht übersteigt, und daß die relative Luftfeuchtigkeit bei 1 atm und 20°C im Gleichgewicht mit der so erhaltenen homogenen gekörnten Waschmittelgrundlage 30% nicht übersteigt.

2. Verfahren nach Anspruch 1, dadurch gekennzeichnet, daß der Zeolith einen Feuchtigkeitsgehalt im Bereich von 5 bis 15 Gew.-% aufweist.

3. Verfahren nach Anspruch 2, dadurch gekennzeichnet, daß der Zeolith Zeolith A ist und einen Feuchtigkeitsgehalt im Bereich von 10 bis 15 Gew.-% aufweist.

4. Verfahren nach Anspruch 2, dadurch gekennzeichnet, daß der Zeolith Zeolith P darstellt, mit einem Silicium-zu-Aluminium-Verhältnis, das 1,33 nicht übersteigt (Zeolith MAP) und einen Feuchtigkeitsgehalt im Bereich von 5 bis 13 Gew.-% aufweist.

5. Verfahren nach Anspruch 4, dadurch gekennzeichnet, daß der Zeolith MAP ein Silicium-zu-Aluminium-Verhältnis, das 1,15:1 nicht übersteigt, aufweist.

6. Verfahren nach einem vorangehenden Anspruch, dadurch gekennzeichnet, daß die relative Luftfeuchtigkeit bei 1 atm und 20°C im Gleichgewicht mit dem homogenen gekörnten Waschmittel 25% nicht übersteigt.

7. Verfahren nach einem der Ansprüche 1 bis 6, dadurch gekennzeichnet, daß ein Peroxy-Bleichmittelsystem anschließend zu dem homogenen gekörnten Waschmittel angemischt wird.

8. Verfahren nach Anspruch 7, dadurch gekennzeichnet, daß das Peroxy-Bleichmittelsystem Natriumpercarbonat umfaßt.

9. Verwendung von Zeolith mit einem Feuchtigkeitsgehalt (entfernbar bei 800°C), der 15 Gew.-% nicht übersteigt, zur Herstellung einer homogenen gekörnten Waschmittelgrundlage mit einer Schüttdichte von mindestens 600 g/l, umfassend Zeolith, organische Tenside und andere Waschmittelbestandteile durch Vermischen und Granulierung in einem Hochgeschwindigkeitsmischer/Granulator, wobei die relative Luftfeuchtigkeit bei 1 atm und 20°C im Gleichgewicht mit der so erhaltenen homogenen gekörnten Waschmittelgrundlage nicht größer als 30% ist.

## Revendications

1. Un procédé de préparation d'une composition détergente granulaire, ledit procédé comprenant l'étape consistant à mélanger et granuler de la zéolite, des agents tensioactifs organiques et d'autres ingrédients détergents dans un mélangeur à grande vitesse/granulateur afin de former une poudre détergente de base granulaire homogène ayant une densité apparente d'au moins 600 g/litre, caractérisé en ce que la zéolite a une teneur en humidité (pouvant être retirée à 800°C) ne dépassant pas 15 % en masse, et en ce que l'humidité relative de l'air à une atmosphère et à 20°C, en équilibre avec la composition détergente de base granulaire homogène ainsi obtenue ne dépasse pas 30 % en masse.

2.  Un procédé selon la revendication 1, caractérisé en ce que la zéolite a une teneur en humidité comprise dans la gamme allant de 5 à 15 % en masse.

3.  Un procédé selon la revendication 2, caractérisé en ce que la zéolite est de la zéolite A et a une teneur en humidité comprise dans la gamme allant de 10 à 15 % en masse.

4.  Un procédé selon la revendication 2, caractérisé en ce que la zéolite est de la zéolite P ayant un ratio silicium/aluminium ne dépassant pas 1,33 (zéolite MAP) et a une teneur en humidité comprise dans la gamme allant de 5 à 13 % en masse.

5.  Un procédé selon la revendication 4, caractérisé en ce que la zéolite MAP a un ratio silicium/aluminium ne dépassant pas 1,15/l.

6.  Un procédé selon l'une des revendications précédentes, caractérisé en ce que l'humidité relative de l'air a une atmosphère et 20°C en équilibre avec la composition détergente granulaire homogène ne dépasse pas 25 %

7.  Un procédé selon l'une des revendications 1 à 6, caractérisé en ce que le système de blanchiment peroxy est mélangé ensuite à la composition détergente granulaire homogène.

8.  Un procédé selon la revendication 7, caractérisé en ce que le système de blanchiment peroxy comprend du percarbonate de sodium

9.  Utilisation de zéolite ayant une teneur en humidité (pouvant être retirée à 800°C) ne dépassant pas 15 % en masse, afin de préparer, par mélange et granulation dans un mélangeur à grande vitesse/granulateur, une composition détergente de base granulaire homogène ayant une densité apparente d'au moins 600 g/litre comprenant de la zéolite, des agents tensioactifs organiques et d'autres ingrédients détergents, l'humidité relative de l'air à une atmosphère et à 20°C en équilibre avec la composition détergente de base granulaire homogène ainsi obtenue ne dépassant pas 30 %.